# EUROPÄISCHE PATENTANMELDUNG

(11) **EP 2 216 211 A1**
(43) Veröffentlichungstag der Anmeldung: **11.08.2010**
(21) Anmeldenummer: 10152712.5
(22) Anmeldetag: 04.02.2010
(51) Int. Cl.: B60R 21/13

(54) **Überrollschutzsystem**

(30) Priorität: 04.02.2009 DE 102009000626
(71) Anmelder: Alutech Gesellschaft m.b.H., 5651 Lend (AT)
(72) Erfinder: Danninger, Christian, 5204, Straßwalchen (AT); Garnweidner, Peter, 5112, Lamprechtshausen (AT)
(74) Vertreter: Wilhelms · Kilian & Partner Patentanwälte

(57) **Zusammenfassung**

Die Erfindung betrifft ein Überrollschutzsystem, insbesondere für ein Kraftfahrzeug, das ein längs einer Ausfahrrichtung von einer eingefahrenen Stellung in eine ausfahrbare Stellung verschiebbares, durch eine fahrzeugseitig befestigte erste Führung (7) während der gesamten Ausfahrbewegung geführtes Uberrolischutzelement (3, 4) umfasst, das durch ein durch eine zweite Führung (52) während der gesamten Ausfahrbewegung geführtes Antriebselement (2) in die ausgefahrene Stellung bringbar ist, wobei die zweite Führung (52) von der ersten Führung (7) in Ausfahrrichtung beabstandet ist.

## Beschreibung

Die Erfindung betrifft ein Überrollschutzsystem, insbesondere für Kraftfahrzeuge, mit ausfahrbarem Überrollkörper.

Herkömmliche Überrollschutzsysteme umfassen einen im Falle eines Überschlags ausfahrbaren Überrollkörper, der die Insassen vor schwerwiegenden Verletzungen schützt. Solche ausfahrbaren Überrollkörper weisen gewöhnlich mehrere Rohre mit konstantem Querschnitt auf, die entlang ihrer Längsachse verschiebbar in ein fahrzeugseitig bzw. karosserieseitig befestigtes Aufnahmeelement eingesetzt sind. Während des normalen Fahrbetriebes befindet sich der Überrollkörper in einer eingefahrenen Stellung, wohingegen, wenn ein Überschlag über eine dafür eingerichtete Sensorik detektiert wird, der Überrollkörper durch ein Antriebsmittel in eine ausgefahrene Stellung gebracht wird.

Um das Ausfahren des Überrollkörpers sicherzustellen und ein Verklemmen zuverlässig zu verhindern, werden hohe Anforderungen an die Fertigungstoleranzen der Rohre des Überrollkörpers und der in dem Aufnahmeelement gebildeten Führungsabschnitte gestellt.

Werden die Rohre des auszufahrenden Überrollkörpers darüber hinaus zur Erhöhung der Festigkeit bzw. Steifigkeit an einem oberen, d.h. an einem der Karosserie abgewandten Ende und/oder unteren Ende, d.h. an einem der Karosserie zugewandten Ende miteinander verbunden, erhöhen sich zusätzlich die Anforderungen an die Fertigungstoleranzen bezüglich Achsabstand und Parallelität der geführten Rohre des Überrollkörpers, da konstruktionsbedingt der Überrollkörper sehr steif ist und keine Verformung zum Ausgleich von Ungenauigkeiten zulässt.

Ein derartiger Überrollschutz mit drei parallel zueinander angeordneten Zylindern zur Führung einer Ausfahrbewegung eines Querbügels ist aus der DE 43 42 401 A1 bekannt. Dabei dient der mittlere Zylinder als Antriebszylinder, während die beiden äußeren Zylinder lediglich zur axialen Führung und zur Stabilisierung des Querbügels gegen Verformungen dienen. Am Querbügel sind Führungsrohre befestigt, welche in den Führungszylindern axial gleiten. Ferner ist der Querbügel in seiner Mitte mit einem Antriebsrohr verschraubt, welches oberhalb des Antriebszylinders mittels Verriegelungskugeln geführt ist. Das Antriebsrohr ist karosserieseitig zu einem dicht im Antriebszylinder geführten Kolben verdickt. Da entlang der Ausfahrrichtung Abschnitte der Führungszylinder und des Antriebszylinders bzw, der Verriegelungskugeln überlappen, müssen auch hierbei hohe Anforderungen an die Fertigungstoleranzen erfüllt werden, um ein Verklemmen während der Ausfahrbewegung zu verhindern.

Diese hohen Toleranzanforderungen wirken sich nachteilig auf die Herstellungskosten aus. Darüber hinaus müssen die zur Herstellung benötigten Maschinen sehr stringente Vorgaben erfüllen.

Ein weiterer Nachteil der herkömmlich bekannten Überrollschutzsysteme besteht darin, dass die den ausfahrbaren Überrollkörper bildenden Führungsrohre bedingt durch die Anordnung der Führungsabschnitte in dem Aufnahmeelement einen konstanten Querschnitt aufweisen. Eine Konstruktion in Richtung Leichtbau wird hierdurch erschwert, da die Bemaßung der Rohre von den geforderten und zu erfüllenden Stabilitätskriterien abhängt und somit ein unteres Grenzmaß nicht unterschreiten darf.

Es ist daher eine Aufgabe der Erfindung, ein Überrollschutzsystem mit einem Aufbau zu schaffen, der größere Fertigungstoleranzen hinsichtlich des ausfahrbaren Überrollkörpers und der zur Führung desselben vorgesehenen Führungen zulässt, der allerdings dennoch die geforderten Stabilitätskriterien erfüllt. Insbesondere soll durch die Erfindung ein in Richtung Leichtbau und Insassenschutz optimiertes Überrollschutzsystem ermöglicht werden.

Diese Aufgabe wird durch ein Überrolischutzsystem gelöst, das die Merkmalskombination des Patentanspruches 1 aufweist. Bevorzugte Ausführungen des Überrollschutzsystems sind Gegenstand der abhängigen Patentansprüche 2 bis 14.

Das Überrollschutzsystem, das insbesondere für den Einbau in Personenkraftfahrzeuge geeignet ist, umfasst ein längs einer Ausfahrrichtung von einer eingefahrenen Stellung in eine ausgefahrene Stellung verschiebbares, durch eine fahrzeugseitig befestigte erste Führung während der gesamten Ausfahrbewegung von der eingefahrenen Stellung in die ausgefahrene Stellung geführtes Überrollschutzelement, das durch ein durch eine zweite Führung während der gesamten Ausfahrbewegung geführtes Antriebselement in die ausgefahrene Stellung bringbar ist. Erfindungsgemäß ist die erste Führung von der zweiten Führung während der gesamten Ausfahrbewegung in Ausfahrrichtung beabstandet, d.h. kein Abschnitt der ersten Führung überlappt entlang der Ausfahrrichtung mit einem Abschnitt der zweiten Führung.

Durch die beabstandete Anordnung der Führungen müssen geringere Toleranzanforderungen im Hinblick auf das Überrollschutzelement und das die Ausfahrbewegung des Überrollelements auslösende Antriebselement erfüllt werden. Weist das Oberrollschutzelement zwei seitliche Kräfte aufnehmende, stabilisierende (Führungs-)Rohre auf, werden dadurch größere Toleranzen bezüglich dem Achsabstand und der Position der Rohre zugelassen, was fertigungstechnisch vorteilhaft ist und die Herstellungskosten reduziert. Darüber hinaus wird ein Verklemmen des Überrollschutzelementes während des Ausfahrens weitestgehend ausgeschlossen.

Ein weiterer Vorteil der beabstandeten Anordnung der Führungen besteht darin, dass ein oberer Teilbereich der Stabilitätsrohre im Querschnitt reduziert sein kann, wodurch ein Aufbau des Überrollschutzsystems in Leichtbauweise ermöglicht wird. Soll ein die Stabilitätsrohre verbindender Querträger mit einem elastisch verformbaren Überschlagkopfschutz ausgestattet sein, kann durch den reduzierten Querschnitt der Überschlagkopfschutz in der eingefahrenen Stellung des Überrollschutzelements bereichsweise in dem fahrzeugseitig befestigten Aufnahmeelement untergebracht werden, wodurch das gesamte Überrollschutzsystem kompakter ausgestaltet werden kann, was sich wiederum vorteilhaft auf die gesamte Ästhetik auswirkt.

Im Folgenden wird eine bevorzugte Ausführungsform der Erfindung beispielhaft unter Bezugnahme auf die beigefügten Zeichnungen beschrieben.

Fig. 1 zeigt eine Schnittansicht des erfindungsgemäßen Überrollschutzsystem.

Fig. 2 zeigt eine bevorzugte Ausführung eines Führungsrohrs des Überrollschutzelementes.

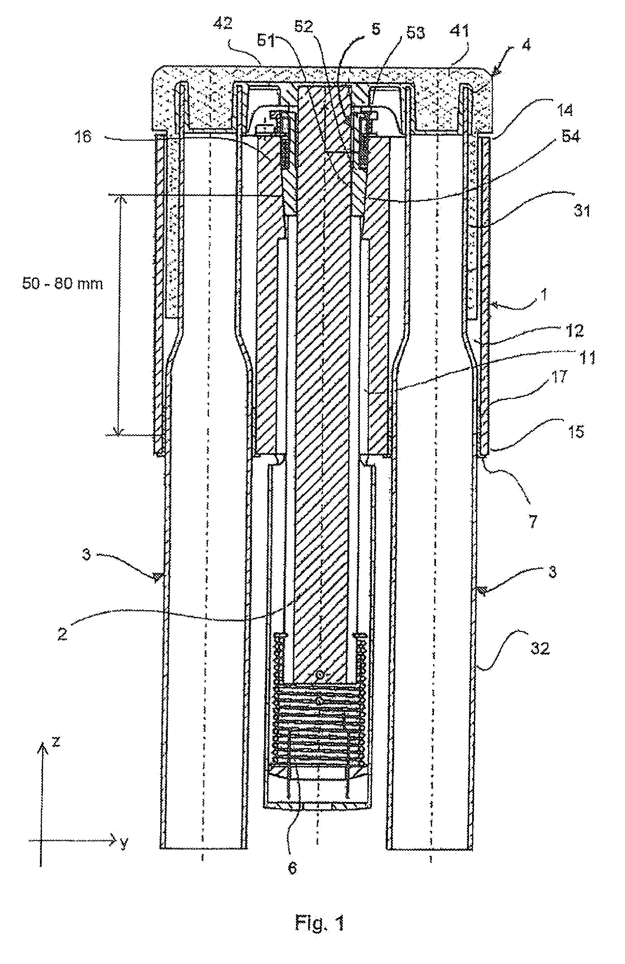

Unter Bezugnahme auf Fig. 1, die eine Schnittansicht darstellt, wird eine beispielhafte Ausführungsform des Überrolischutzsystems erläutert, dessen Überrollschutzelement 2,3,4 von einer in Fig. 1 dargestellten eingefahrenen Stellung in eine ausgefahrene Stellung verschoben werden kann. Das Überrollschutzelement umfasst ein Antriebselement bzw. einen Träger 2, der, wie im Anschluss erläutert, in der ausgefahrenen Stellung verklemmt wird und zur Aufnahme von Kräften in der in Fig. 1 dargestellten z-Richtung vorgesehen ist. Ferner umfasst das Überrollschutzelement zwei parallel verlaufende rohrförmige Führungselemente 3, die an deren oberen, der Karosserie abgewandten Ende mittels eines Querträgers 4 verbunden sind. Der zwischen den rohrförmigen Führungselementen 3 angeordnete Träger 2 befindet sich an dessen oberen Ende im Eingriff mit dem Querträger 4. In Fig. 1 sind die Führungselemente 3, der Träger 2 und der Querträger 4 als einzelne Bauteile dargestellt. Es ist aber ebenfalls möglich, diese Bauteile einteilig auszugestalten.

Weiterhin umfasst das Überrollschutzsystem ein Aufnahmeelement 1, das mittelbar oder unmittelbar an einem Fahrzeug befestigt ist. In dem Aufnahmeelement 1 sind zwei Aufnahmeräume 12 für die Führungselemente 3 und ein Aufnahmeraum 11 für den Träger 2 vorgesehen. Innerhalb dieser Räume sind die Führungselemente 3 und der Träger 2 in z-Richtung verschiebbar. Die Aufnahmeräume 12 für die Führungen 3 oder der Aufnahmeraum 11 für den Träger können entweder als Durchgänge oder als geschlossene Aufnahmeräume, in die lediglich eine Öffnung zum Ausgleich eines Unterdruckes mündet, ausgebildet sein.

Zur Verschiebung des Überrollschutzelementes von der eingefahrenen in die ausgefahrene Stellung ist ein Antriebsmittel 6 vorgesehen, das bei Detektion eines Überschlages des Fahrzeuges auslöst und das Überrollschutzelement in Ausfahrrichtung (z-Richtung) verschiebt Bei einem solchen Antriebsmittel kann es sich z.B. um ein vorgespanntes Federelement, eine Gasfeder, einen pyrotechnischen Aktuator oder dergleichen handeln. In Abhängigkeit der Ausgestaltung und Anordnung des Antriebsmittels ist der Aufnahmeraum 11 für den Träger als Durchgang oder als geschlossener Aufnahmeraum mit Ausgleichsöffnung ausgestaltet.

Wird, wie in Fig. 1 gezeigt, eine Feder 6 als Antriebsmittel verwendet, wird diese durch eine nicht gezeigte Vorrichtung in dem vorgespannten Zustand gehalten, wobei diese Vorrichtung die Feder bei Detektion eines Überschlages zum Ausfahren des Überrollschutzelementes freigibt. Bevorzugte Vorrichtungen, die das Antriebsmittel 6 freigeben, sind z.B. elektromagnetische oder pyrotechnische Aktuatoren.

An einem der Karosserie abgewandten Endabschnitt 16 des Aufnahmeraumes 11 für den Träger ist ein Verriegelungsmechanismus, der im gezeigten Fall als Klemmmechanismus 5 ausgebildet ist, angeordnet, der eine Verschiebung des Überrollschutzelementes 2,3,4 in Ausfahrrichtung (positive z-Richtung) zulässt und in die entgegengesetzte Richtung (negative z-Richtung) verhindert. Wird ein Überschlag durch entsprechende Sensorik detektiert und ist das Überrollschutzelement in seine ausgefahrene Stellung durch das Antriebsmittel 6 und den Träger 2 gebracht worden, verhindert der Klemmmechanismus 5 ein Zurückfahren des Überrollschutzelementes in die entgegengesetzte Richtung. Zu diesem Zweck umfasst der Klemmmechanismus 5 Klemmelemente 52, z.B. Keile oder dergleichen, die durch ein Federmittel 53 in die negative z-Richtung gedrückt werden. Durch die geometrische Ausgestaltung des Aufnahmeelements 1 und des Außenumfangs des Trägers 2 ist an dem Endabschnitt 16 ein sich verjüngender Raum 54 ausgebildet, in dem die Keile 52 eingesetzt sind. Wird das Überrollschutzelement durch das Antriebsmittel 6 und den Träger 2 in seine ausgefahrene Position katapultiert, übt der Träger 2 über die an ihn anliegenden Flächen 51 der Keile 52 eine Kraft auf das Federmittel 53 aus, wodurch dieses zusammengedrückt wird und die Keile 52 in die Ausfahrrichtung freigegeben werden. Durch die Verschiebung der Keile 52 kann sich der Träger 2 innerhalb des Aufnahmeraumes 11 in positiver z-Richtung verschieben. Nach Erreichen der ausgefahrenen Stellung des Schutzelementes werden die Keile 52 durch die Federwirkung des Federmittels 53 wieder in den sich verjüngenden Raum 54 gedrückt. Wenn in dieser Stellung eine Kraft auf den Querträger 4 in negativer z-Richtung ausgeübt wird, überträgt der Träger 2 über die an ihn anliegenden Flächen 51 eine Kraft auf die Keile 52. Hierdurch werden die Keile 52 weiter in den sich verjüngenden Raum 54 gedrückt, wodurch der Träger 2 festgeklemmt und das gesamte Überrollschutzelement verriegelt wird.

Die Flächen 51 der Keile 52 bilden bei dieser Ausführungsform des Verriegelungsmechanismus gleichzeitig einen Abschnitt zur Führung des Trägers innerhalb des Aufnahmeraums 11 während der gesamten Ausfahrbewegung des Überrollschutzelements.

Das Überrollschutzsystem ist aber auf einen derart ausgebildeten Verriegelungsmechanismus 5 nicht beschränkt. Es ist ebenfalls möglich, das Schutzelement beispielsweise über eine Zahnstange und eine entsprechende Verrastung, die eine Versetzung des Überrollschutzelementes nur in Ausfahrrichtung erlauben, in der ausgefahrenen Stellung zu verriegeln.

In die Aufnahmeräume 12 sind Führungsrohre 3 eingesetzt, die in axialer Richtung, d.h. in z-Richtung, verschiebbar sind. Innerhalb der Aufnahmeräume 12 sind an dem der Karosserie zugewandten Endabschnitt 15 des Aufnahmeelements 1 Führungen 7 vorgesehen, die an der Außenoberfläche der entsprechenden Führungsrohre 3 anliegen und während der gesamten Ausfahrbewegung eine geführte Bewegung der Führungsrohre 3 in Ausfahrrichtung ermöglichen. Die Führung 7 kann als Buchse oder Hülse ausgebildet sein, die in das der Karosserie zugewandte Ende 15 des Aufnahmeraums 12 eingesetzt ist, Die Buchse 7 kann z.B. aus einem Kunststoffmaterial oder aus Metall gebildet sein.

Die Führungen 7 sind in Ausfahrrichtung derart versetzt zu der Führung 51, die durch die Keile 52 gebildet wird, angeordnet, dass während der gesamten Ausfahrbewegung kein Abschnitt der Führungen 7, der sich in Kontakt mit einem der Führungsrohre 3 befindet mit einem Abschnitt der Führung 51, der sich in Kontakt mit dem Träger 2 befindet entlang der Ausfahrrichtung überlappt. Mit anderen Worten, die Führungen 7, 51 sind während der gesamten Ausfahrbewegung entlang der Ausfahrrichtung beabstandet angeordnet. Durch diese Beabstandung der Führungen 7, 52 wird erreicht, dass die Gefahr eines Verklemmens während der Ausfahrbewegung eliminiert, zumindest aber verringert wird und somit größere Fertigungstoleranzen hinsichtlich des Achsabstands und der Parallelität der Führungsrohre 3 und der fertigungstechnischen geometrischen Ausgestaltung des Trägers 2 und der Keilflächen 51 tolerierbar sind.

Werden z.B. die Aufnahmeräume 12 zur Aufnahme der Führungsrohre 3 nicht als Durchgänge ausgebildet, sondern als geschlossene Aufnahmeräume, in die lediglich die Öffnung zum Ausgleich eines sich während einer Ausfahrbewegung bildenden Unterdruckes mündet, werden die Führungen 7 der Führungsrohre 3 durch eingesetzte oder eingeklebte Kunststoff- bzw. Metallhülsen verwirklicht.

Der Abstand der Führungen 7 und der Führung 51 kann in einem Bereich von 50 bis 80 mm liegen. Je nach Toleranzanforderung kann der Abstand auch außerhalb dieses Bereichs liegen.

Es ist ebenfalls möglich, dass die Führung 7 an dem der Karosserie abgewandten Endabschnitt und die Führung 51 an dem der Karosserie zugewandten Endabschnitt des Aufnahmeelements 1 angeordnet ist.

Allerdings wird die in Fig. 1 gezeigte Anordnung bevorzugt, denn hierdurch wird der Aufbau des Überrollschutzsystems in Leichtbauweise ermöglicht, da ein Teilbereich 31 der Führungsrohre 3, der sich nicht in Anlage mit der Führung 7 befindet, im Querschnitt reduziert werden kann.

Bei der in Fig. 1. gezeigten Ausführungsform ist jeweils lediglich eine einstückige Führung 7 für ein einzelnes Führungsrohr 3, und lediglich eine, aus den einstückigen Keilen 52 gebildete Führung 51 für den Träger 2 vorgesehen, so dass die Führungsrohre 3 und der Träger 2 jeweils ausschließlich durch eine einzelne Führung 7, 51 während der gesamten Ausfahrbewegung geführt werden. Eine jeweilige Führung 7, 51 für ein Führungsrohr 3 bzw. für den Träger 2 kann jedoch auch mehrere einzelne Teile umfassen, welche jeweils bei Kontakt das Führungsrohr 3 bzw. den Träger 2 führen und in Ausfahrrichtung beabstandet sind. Unter Führung im Sinne dieser Anmeldung ist in diesem Fall die Gesamtheit der einzelnen Teile der Führung zu verstehen. Die Ausdehnung in Ausfahrrichtung einer mehrere Teile umfassenden Führung entspricht dem Abstand der am weitesteten entfernt liegenden Enden der äußersten Teile der Führung. In diesem Fall liegt eine Beabstandung der Führungen im Sinne der Anmeldung vor, wenn sich die jeweiligen Ausdehnungen der Führungen in Ausfahrrichtung nicht überlappen.

Da die Führungsrohre 3 im ausgefahrenen Zustand des Überrollschutzelementes nicht verklemmt werden und somit keine Kräfte in z-Richtung aufnehmen können, sind diese unter Berücksichtigung von Krafteinwirkungen in x- (senkrecht zur Papierebene) und y-Richtung zu dimensionieren. Diese Krafteinwirkungen in x- und y-Richtung führen zu Biegebeanspruchungen der Führungsrohre 3. Ein in Leichtbauweise optimiertes Führungsrohr 3 weist daher einen variablen Querschnitt auf, dessen Widerstandsmoment mit dem Biegemoment steigt. Genauer bedeutet dies für das Überrollschutzsystem, dass das Führungsrohr 3 im oberen Teilbereich 31 ein kleines Widerstandsmoment und im zweiten Teilbereich 32, der mit der Führung 7 während des Ausfahrvorgangs zusammenwirkt, ein großes Widerstandsmoment aufweist.

Das in Fig. 1 gezeigte Überrollschutzsystem weist ferner eine elastisch verformbare Abdeckung 41 auf, die auf dem Querträger 4 vorgesehen ist zum Schutz der Insassen vor Kopfverletzungen im Fall eines Überschlages. Durch die Versetzung der Führungen 7 für die Führungsrohre 3 und der Führung 51 für den Träger 2 und der damit einhergehenden Möglichkeit, den Teilbereich 31 der Führungsrohre 3 im Querschnitt zu reduzieren, kann die Abdeckung 41 zumindest bereichsweise in der eingefahrenen Stellung des Überrollschutzelementes in dem Aufnahmeraum 12 aufgenommen werden. Hierdurch erhält das Überrollschutzsystem einen sehr kompakten Aufbau, wodurch das Überrollschutzsystem auch in Fahrzeugen mit wenig Bauraum einsetzbar ist.

Der Querschnitt der Führungsrohre 3 kann kreis- bzw. rohrförmig sein. Allerdings können die Führungsrohre 3 auch elliptische, rechteckige oder quadratische Querschnitte aufweisen. Diese genannten Querschnitte können ebenfalls als Hohlquerschnitte ausgeführt sein, wodurch sich die Führungen gut in einem Strangpressverfahren herstellen lassen.

Der Träger 2 kann ebenso unterschiedliche Querschnitte und Ausführungen mit Voll- oder Hohlquerschnitt aufweisen.

Der Träger 2 und die Führungsrohre 3 können beispielsweise aus Aluminium, Magnesium, Eisen oder Legierungen derselben, oder aus die benötigte Steifigkeit aufweisende Kunststoffe hergestellt sein.

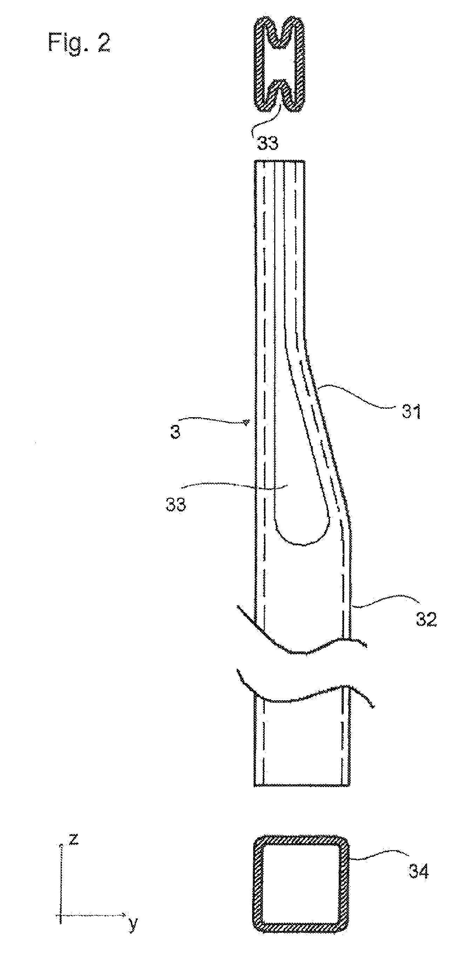

Fig. 2 zeigt eine bevorzugte Ausführungsform der Führungsrohre 3. Das Führungsrohr 3 weist im Bereich 32 einen quadratischen Hohlquerschnitt 34 auf. An den Bereich 32 schließt sich in z-Richtung der Bereich 31 an, dessen Querschnitt zur Bauraumoptimierung in y-Richtung verändert ist. Eine solche Veränderung kann z.B. durch Verprägen des quadratischen Querschnittes bewerkstelligt werden. In einem oberen Bereich der Fig. 2 ist die Verprägung des Querschnittes 34 im Schnitt mit dem Bezugszeichen 33 gezeigt.

Zur Herstellung der Führungsrohre 3 mit beliebigem Querschnitt können verschiedene Verfahren zum Einsatz kommen. Beispielsweise können die Führungsrohre 3 durch Urformverfahren, wie Gießen und dergleichen, oder durch Umformverfahren, wie Strangpressen, Tiefziehen und dergleichen, hergestellt werden. Diese Verfahren sind dahingehend umweit- bzw. ressourcenschonend, da sie Restmaterial (Schrott) weitestgehend vermeiden.

## Patentansprüche

1. Überrollschutzsystem, insbesondere für ein Kraftfahrzeug, umfassend:
ein längs einer Ausfahrrichtung von einer eingefahrenen Stellung in eine ausgefahrene Stellung verschiebbares, durch eine fahrzeugseitig befestigte erste Führung (7) während der gesamten Ausfahrbewegung geführtes Überrollschutzelement (3, 4), das durch ein durch eine zweite Führung (52) während der gesamten Ausfahrbewegung geführtes Antriebselement (2) in die ausgefahrene Stellung bringbar ist, wobei die zweite Führung (52) von der ersten Führung (7) in Ausfahrrichtung beabstandet ist.

2. Überrollschutzsystem nach Anspruch 1, wobei die zweite Führung (52) eine Klemmführung ist.

3. Überrollschutzsystem nach Anspruch 1 oder 2, wobei das Antriebselement (2) einen Teil des Überrollschutzelementes (3,4) bildet.

4. Überrollschutzsystem nach einem der vorhergehenden Ansprüche, wobei der Abstand zwischen der ersten Führung (7) und der zweiten Führung (52) in Ausfahrrichtung mindestens 50 mm beträgt.

5. Überrollschutzsystem nach einem der vorhergehenden Ansprüche, wobei der Abstand zwischen der ersten Führung (7) und der zweiten Führung (51, 52) in einem Bereich von 50-80 mm liegt.

6. Überrollschutzsystem nach einem der vorhergehenden Ansprüche, wobei die erste Führung (7) und die zweite Führung (52) in einem fahrzeugseitig befestigten Aufnahmeelement (1) angeordnet sind.

7. Überrollschutzsystem nach Anspruch 6, wobei die erste Führung (7) an einem karosserieseitigen Endabschnitt (15) des Aufnahmeelementes (1) angeordnet ist.

8. Überrollschutzsystem nach Anspruch 6 oder 7, wobei die zweite Führung (52) an einem der Karosserie abgewandten Endabschnitt (16) des Aufnahmeelementes (1) angeordnet ist.

9. Überrollschutzsystem nach einem der Ansprüche 6 bis 8, wobei das Überrollschutzelement (3, 4) zwei länglich ausgebildete Schutzelemente (3) umfasst, die jeweils durch die erste Führung (7) geführt durch das Aufnahmeelement (1) verlaufen,

10. Überrollschutzsystem nach Anspruch 9, wobei die der Karosserie abgewandten Endabschnitte der parallel verlaufenden Schutzelemente (3) über einen Querträger (4) verbunden sind, mit dem das der Karosserie abgewandte Ende des Antriebselements (2) im Eingriff ist.

11. Überrollschutzsystem nach Anspruch 9 oder 10, wobei die der Karosserie abgewandten Endabschnitte der Schutzelemente (3) eine im Vergleich zu denjenigen Abschnitten der Schutzelemente (3), die durch die erste Führung (7) verlaufen, verringerte Querschnittsabmessung aufweisen.

12. Überrollschutzsystem nach einem der Ansprüche 10 oder 11, wobei der Querträger (4) mit einer elastisch verformbaren Abdeckung (41) versehen ist, die in der eingefahrenen Stellung der Schutzelemente (3) zumindest bereichsweise in dem Aufnahmeelement (1) untergebracht ist,

13. Überrollschutzsystem nach einem der vorhergehenden Ansprüche, wobei das Schutzelement (3) ein Führungsrohr ist, dessen der Karosserie abgewandter Endabschnitt ein zur Aufnahme des Querträgers (4) ausgebildetes Profil aufweist.

14. Überrollschutzsystem nach Anspruch 13, wobei das Profil ein Strangpressprofil ist.
